# EUROPÄISCHE PATENTSCHRIFT

(11) **EP 0 587 988 B1**
(45) Veröffentlichungstag und Bekanntmachung des Hinweises auf die Patenterteilung: **29.07.1998**
(21) Anmeldenummer: 93107568.3
(22) Anmeldetag: 10.05.1993
(51) Int. Cl.: C08J 7/04, D06M 15/00

(54) **Oleophobe und/oder permanente hydrophobe Modifizierung für polymere Oberflächen, Verfahren zur Erzeugung der Modifizierung sowie ihre Anwendung**
Oleophobic and/or permanent hydrophobic modification at polymeric surfaces, process for their preparation and application
Modification oléophobe et/ou hydrophobe permenente de surfaces polymères, procédé pour leur préparation et leur application

(30) Priorität: 31.08.1992 DE 4228975
(43) Veröffentlichungstag der Anmeldung: 23.03.1994
(73) Patentinhaber: W.L. Gore & Associates GmbH, 85636 Putzbrunn (DE)
(72) Erfinder: Buchhammer, Heide-Marie, Dr., D-01237 Dresden (DE); Bürger, Wolfgang, Dr., D-81825 München (DE); Lunkwitz, Klaus, Dr., D-01187 Dresden (DE); Petzold, Gudrun, D-01257 Dresden (DE); Witzko, Richard, D-38512 Wasserburg (DE)
(74) Vertreter: Kador & Partner

(56) Entgegenhaltungen:
- EP-A- 0 124 676
- WO-A-91/05817
- DE-A- 3 620 033
- US-A- 3 420 703
- DATABASE WPI Derwent Publications Ltd., London, GB; AN 87-089924[13] & JP-A-62 039 636 (MITSUBISHI RAYON KK.) 20. Februar 1987

## Beschreibung

Die Erfindung betrifft eine oleophobe und/oder permanente hydrophobe Modifizierung für polymere Oberflächen in einem dünnen Film.

Bekannte Hydrophobausrüstungen für Fasern basieren auf Aluminium- und Zirkoniumsalzen langkettiger Carbonsäuren. Solche Hydrophobausrüstungen sind z.B. bei E.B. Higgings, Waterproofing and Waterrepellance, J.L. Moilliet, Ed., El-sevier Pub. Co., Amsterdam, Seite 188, 1963, beschrieben. Infolge der Alkalilöslichkeit der Verbindungen weisen die Ausrüstungen jedoch keine Waschpermanenz auf.

In der DE 24 20 971 ist eine Ausrüstung auf Paraffinbasis beschrieben, welche derzeit bevorzugt als Extender für polymere Fluorcarbonausrüstungen verwendet wird. Diese Ausrüstung auf Paraffinbasis erfordert Zusätze von Salzen oder Polymeren, um eine genügende Stabilität und Waschbeständigkeit zu erzielen. Ein hohes Auftragsgewicht und damit ein veränderter Griff und Wasserdampftransport stellen Nachteile dieser Ausrüstungen dar.

Metallkomplexe des Chroms bzw. Pyridinium-Komplexe langkettiger aliphatischer Verbindungen werden zunehmend kritisch hinsichtlich toxikologischer Probleme betrachtet. Ähnliche Aspekte betreffen Formaldehydharze, die dem Substrat eine gute Wasserabweisung verleihen, jedoch zur Formaldehydabgabe neigen.

In der DE 39 39 341 sind fluorierte Copolymere auf Basis von Polyacrylat(methacrylat)-Copolymeren beschrieben, welche zur Oleophob- und Hydrophobausrüstung eingesetzt werden, z.B. in Kombination mit kationisch modifizierten Polyurethanen. Je nach Fasermaterial erfolgt eine spezifische Applikation. Zum Applizieren dieser teilpermanenten Ausrüstung müssen jedoch organische Lösungsmittel für das teilfluorierte Copolymer verwendet werden. Außerdem ist der Auftrag mehrerer Fluorcarbonschichten auf das Substrat erforderlich sowie der Zusatz verschiedener Hilfsstoffe.

In der DE 36 20 033 wird die Kombination einer Perfluoralkylgruppen enthaltenden Verbindung mit Quaternisierungsprodukten basischer Fettsäureamide beschrieben, durch die der für die Ausrüstung notwendige Einsatz an Fluorpolymeren deutlich gesenkt wird. Er beträgt für optimale Hydrophobiewerte bei Ausrüstung von Baumwolle/Polyester jedoch noch mindestens 10 g/l, wobei deutliche Mengen weiterer Produkte Verwendung finden, z.B. 60 g/l Kunstharz, 4 g/l Katalysator oder 20 g/l Fettsäureamid.

In der EP 0 008 761 wird eine Modifizierung von Polyamid-Soft mit 10 g/l Acrylat-Copolymer und beispielsweise 10 g/l einer als Papierleimungskomponente bekannten polykationischen Verbindung vorgeschlagen. Hier erzielt man einen guten Abperleffekt bei Wasser, aber der Wasserdurchschlag kann nicht befriedigen.

Bei Verwendung einer ausschließlich hydrophilen Perfluoralkylgruppen enthaltenden Verbindung ist es weiters nicht möglich, Oleophobausrüstungen für Textilien zu erhalten. Eine Hydrophobie- und Oleophobiewirkung ist nur in einer Kombination von Acrylat-(Co)-Polymer und Fettsäureamid zu erzielen, wobei zur Verbesserung der Permanenz ein Extender zugegeben werden muß.

Die Verwendung niedermolekularer Fluorcarbone (Perfluoralalkansäuren, ihre Chromatkomplexe) scheitert an der ungenügenden Waschstabilität, insbesondere der Hydrolyse unter alkalischen Bedingungen. Des weiteren ist zu beachten, daß Entsorgungsprobleme bei Fluorcarbonflotten in Zukunft kritischer betrachtet werden.

Aufgabe der vorliegenden Erfindung ist es, verbesserte permanente Hydrophobausrüstungen bereitzustellen, die sich in geringen Auftragsmengen in Monoschichten oder begrenzten Multischichten auf der polymeren Oberfläche erzeugen lassen. Solche Modifizierungen sollen eine gute chemische und mechanische Permanenz gewährleisten, und ein Auftrag aus wäßriger oder wäßrig-alkoholischer Lösung, also nichtorganischen Lösungsmitteln, soll ermöglicht werden.

Idee der vorliegenden Erfindung ist es, daß eine effektive Ausrichtung der Moleküle an der Oberfläche die hydrophoben bzw. oleophoben Eigenschaften der Ausrüstung verbessern und diese Ausrichtung unter Ausnutzung koordinativer Moleküleffekte bewirkt werden kann.

Gegenstand der vorliegenden Erfindung ist eine oleophobe und/oder permanente hydrophobe Modifizierung für polymere Oberflächen in einem dünnen Film, wobei der Film unter Ladungsausgleich aus wenigstens einer Schicht aus einem wasserlöslichen Polykation und/oder einem kationischen Kunstharz sowie einem langkettigen Tensid oder einem alkylsubstituierten Polyanion ausgebildet ist.

Bevorzugte Ausführungsformen ergeben sich aus den Unteransprüchen.

Gegenstand der Erfindung ist des weiteren ein Verfahren zur Erzeugung einer oleophoben und/oder permanenten hydrophoben Modifizierung auf polymeren Oberflächen, bei dem die polymere Oberfläche unter Ladungsausgleich mit einer Lösung aus einem Polykation und/oder einem kationischen Kunstharz sowie ferner mit einer Lösung eines langkettigen Tensids oder eines alkylsubstituierten Polyanions als zweite Komponente behandelt wird, wobei zwischen dem Polykation und/oder dem kationischen Kunstharz und der zweiten Komponente Komplexbildung erfolgt und dieser Komplex gegebenenfalls thermisch fixiert und umorientiert wird.

Bevorzugte Ausführungsformen des erfindungsgemäßen Verfahrens ergeben sich aus den Unteransprüchen.

Gegenstand der Erfindung ist auch die Verwendung der beanspruchten Modifizierung zur Beschichtung von Fasern oder textilen Materialien und zur Bildung von Membranen.

Eine Membran kann insbesondere auf ihrer gesamten Oberfläche mit einem Polykation und/oder einem kationisch modifizierten Kunstharz behandelt werden, um eine positive Überschußladung, d.h. ein positives Zetapotential zu erzeugen. Unter Gesamtoberfläche wird hierbei nicht nur die äußere Oberfläche verstanden, sondern auch die inneren Oberflächen, d.h. die Poren der Membran. Anschließend ist wieder eine Komplexbildung mit langkettigen ionischen Tensiden oder alkylsubstituierten Polyanionen möglich. Die gesamte modifizierte Membran, insbesondere mikroporöse Membran, zeichnet sich dann dadurch aus, daß sie bei Ladungsausgleich der Komponenten hydrophob ist bzw. im Fall des Einsatzes von perfluorierten ionischen Verbindungen auch oleophob.

Die Vorteile der erfindungsgemäßen Modifizierung liegen einerseits in dem einfachen Verfahren zu ihrer Herstellung, z.B. benötigt man lediglich wäßrige oder wäßrig-alkoholische Ausgangs lösungen, die frei von weiteren organischen Lösungsmitteln sind, sowie andererseits in ihrer guten Waschpermanenz und in den geringen Einsatzmengen und Applikationsmöglichkeit für viele polymere Substrate. Weiterhin besteht die Möglichkeit, eine halogenfreie permanente Hydrophobmodifizierung ohne den Zusatz einer toxischen Verbindung zu erhalten.

Die erfindungsgemäße Modifizierung besteht einmal aus einem Polykation und/oder einem kationischen Kunstharz, welche in geringer Konzentration die zumeist ein negatives Zeta-Potential aufweisende polymere Oberfläche überzieht und dem Substrat ein positives Zeta-Potential verleiht. Die zweite und zur Verbesserung der Hydrophob- und Oleophobeigenschaften im wesentlichen verantwortlich zeichnende Komponente ist ein langkettiges (anionaktives) Tensid, vorzugsweise ein Fluortensid oder ein Polyanion mit aliphatischen oder aliphatisch/aromatischen Seitenketten.

Die erfindungsgemäße Modifizierung ist also so aufgebaut, daß sich ein hydrophiles Polykation und/oder ein polykationisch funktionalisiertes Kunstharz auf der polymeren Oberfläche des Substrates befindet und adsorptive Kräfte (physikalische oder elektrostatische Adsorption) die Verbindung zwischen dem Substrat und dem Polykation herstellen. Der Polykationfilm weist Überschußladungen auf, die dem behandelten Substrat ein positives Zeta-Potential verleihen und zur Reaktion mit zusätzlichen Komponenten befähigen. Diese Reaktionsmöglichkeit wird zur Komplexbildung mit gelösten langkettigen Tensiden oder Polyanionen im Folgeschritt genutzt.

Diese Modifizierung der polymeren Oberfläche erfolgt gezielt mit solchen Komponenten, die einen hohen Ordnungszustand auf der Oberfläche ausprägen und dem Substrat wasser- und ölabweisende Eigenschaften verleihen. Die Überschußladung des kationischen Films wird in einer weiteren Reaktionsmöglichkeit zur Vernetzung genutzt. Eine gezielte Komplexbildung, eventuell in Kombination mit einer thermischen Nachfixierung, verleiht der Modifizierung die gewünschte Permanenz und dient der Um- oder Neuorientierung der äußersten wasser- und ölabweisenden Komponente.

Die erfindungsgemäße Modifizierung beruht also auf einer elektrochemischen Wechselwirkung zwischen der polymeren Oberfläche und dem Polyelektrolyten. Durch eine Auswahl geeigneter und strukturierter Polykationen und/oder kationischer Kunstharze erfolgt eine permanente Umladung der Polymeroberfläche des Substrates, und durch eine Reaktion mit verzweigten langkettigen Tensiden oder alkylsubstituierten Polyanionen und eventuell nachfolgender Fixierung erhält man einen stabilen Ordnungszustand, der permanente Hydrophobeffekte bei der Verwendung halogenfreier Verbindungen bzw. Oleophobieeffekte bei der Verwendung aus der Lösung applizierter Fluortenside bewirkt.

Das wasserlösliche Polykation bzw. kationische Kunstharz wird so ausgewählt, daß es in kürzester Zeit alle äußeren Oberflächen des Substrats bedeckt, das Substrat umlädt (positives Zeta-Potential) und demzufolge eine positive Überschußladung des Substrats initiiert. Dieses geladene Substrat muß genügend freie und leicht zugängliche reaktive Gruppen aufweisen, die in der Lage sind, einen stabilen Komplex mit anionenaktiven langkettigen Tensiden oder alkylsubstituierten Polyanionen zu bilden. Diese funktionellen Verbindungen müssen in der Lage sein, durch Vororientierung im Molekül und während der Komplexbildung sowie durch einen sich anschließenden Fixierungsprozeß, einen hohen Ordnungszustand an der Oberfläche auszubilden.

Für das Verfahren sind sowohl fluorfreie als auch fluorhaltige Varianten im Einbad- oder Zweibadverfahren möglich. Je nach gewählter Modifizierungsvariante können bevorzugt besonders permanent hydrophobe und/oder besonders oleophobe Wirkungen erzielt werden.

Die erfindungsgemäße Modifizierung kann für eine Vielzahl von polymeren Substraten mit negativem Zeta-Potential eingesetzt werden. Darunter fallen derartige Fasern, textile Flächengebilde und auch Membranmaterialien. Diese Fasern oder textile Flächengebilde beinhalten sowohl synthetische als auch native polymere Ausgangsstoffe. Zu den nativen Ausgangsstoffen sind insbesondere Cellulose, Baumwolle, Wolle oder Seide zu rechnen. Auch Mischungen von synthetischen und nativen polymeren Ausgangsstoffen sind einsetzbar. Infolge der Komplexstabilität ist ein Ablösen von Schichten auf ein Minimum reduziert.

Eine optimale Modifizierung kann gegebenenfalls mit einer Monoschicht des Komplexes erzielt werden, da der Aufzug des Polykations bzw. kationischen Kunstharzes auf das Substrat konzentrationsunempfindlich ist. Diese und andere Gegenstände der Erfindung werden nachfolgend weiter erläutert.

Bevorzugte Modifizierungen mit mindestens einer Monoschicht des Komplexes sind erhältlich, indem man
a) ein Polykation und/oder ein kationisches Kunstharz auf der Substratoberfläche adsorbiert und die Schicht mit mindestens einem alkylgruppenhaltigen Polyanion komplexiert, oder
b) ein Polykation und/oder ein kationisches Kunstharz auf der Substratoberfläche adsorbiert und die Schicht mit aliphatischen unverzweigten längerkettigen Fluortensiden komplexiert.
   Eine weitere Variante, die im Rahmen der Erfindung liegt besteht darin, daß man
c) ein Polykation auf der Substratoberfläche adsorbiert und die Schicht mit mindestens einer, vorzugsweise zwei polyfunktionellen Verbindungen enthaltenden Kunstharzen komplexiert, wobei mindesten eine polyfunktionelle Verbindung ionische bzw. Dipolgruppen enthält.

In diesem Fall dient das Kunstharz als zweite Komponente und bewirkt durch seine anionischen Anteile den angestrebten Ladungsausgleich.

Verbindungen, die nach a) bevorzugt eingesetzt werden können, sind:
- partiell veresterte bzw. amidierte Copolymere des Maleinsäueanhydrid
- partiell veresterte oder amidierte Polyacryl(methacryl)säurederivate.

Verbindungen, die nach b) bevorzugt eingesetzt werden können, sind:
- Perfluorcarbonsäuren CF₃-(CF₂)ₙ-COOH n>6
- Perfluoralkylsulfonsäuren CF₃-(CF₂)ₙ-SO₂OH n>6.

Verbindungen, die nach c) bevorzugt eingesetzt werden können, sind:
- Wachs- und Paraffinemulsionen
- Wachsdispersionen mit Polyvinylalkohol, Acrylaten, Ethylen-methacrylsäure-Copolymere, Ethylenmethacrylsäure-Vinylacetat-Copolymere
- fettsäuremodifizierte Harze.

Polyfunktionelle Verbindungen, die mit den Polykationen chemische Bindungen eingehen können, sind weiterhin Verbindungen, die additionsfähige Mehrfachbindungen aufweisen, Epoxidgruppen, Aldehydgruppen, Isocyanatgruppen, ferner Säureanhydridgruppen und Acylhalogenidgruppen.

Die polymere Oberfläche, auf der eine oleophobe und/oder permanent hydrophobe Modifizierung erzeugt wird, kann mit einem niedermolekularen Alkohol oder Netzmittel vorbehandelt werden.

Wasser ist das bevorzugte Lösungsmittel für die Polykationen bzw. kationischen Kunstharze, obwohl andere Lösungsmittel wie z.B niedere Alkohole allein oder in Kombination mit Wasser verwendet werden können. Je nach Art der eingesetzten Polykationen (Molmasse, Ladungsdichte, Art der funktionellen Gruppen) und den Reaktionsbedingungen (Temperatur, pH-Wert, Reaktionszeit) kann so für jedes Substrat eine optimale Endgruppenaktivität und Bedeckung der Oberfläche erzielt werden.

Die Reaktionszeit variiert zwischen 1 s und 1 h. Über den pH-Wert kann die Reaktivität der funktionellen Gruppen beeinflußt werden; optimale Werte für die Komplexbildung liegen zwischen pH 4 und pH 8. Nach der Adsorption des Polykations bzw. kationischen Kunstharzes an das Substrat wird der überschüssige kationische Anteil durch Abquetschen bzw. durch Wasserbehandlung entfernt. Die Komplexbildung erfolgt wiederum aus wäßriger Lösung, wobei:
A) modifizierte Kunstharze, die z.B. aus 0,1 bis 50%igen wäßrigen Lösungen/Dispersionen eingesetzt werden. Vorzugsweise enthalten diese Lösungen 5 bis 60 g Kunstharz auf 1000 ml Wasser;
B) alkylgruppenhaltige oder sonstige Polyanionen, die z.B. aus 0,1 bis 30%igen wäßrigen Lösungen appliziert werden. Vorzugsweise enthalten diese Lösungen 1 bis 20% Polyanion;
C) aliphatische längerkettige anionaktive Fluortenside, die z.B. in 0,01 bis 20%igen wäßrig-alkoholischen Lösungen verwendet werden. Vorzugsweise enthalten diese Lösungen 0,1 bis 10% des Tensides.

Die Ausprägung des wirksamen hydrophoben bzw. hydrophoben-oleophoben Komplexes kann gegebenenfalls bei erhöhten Temperaturen, z.B. im Bereich von 10 - 80°C durchgeführt werden.

Die Umsetzung kann ein- oder zweistufig erfolgen. Einstufig bedeutet, daß das Polykation bzw. das kationische Kunstharz und eine der sogenannten Zweitkomponenten (Tensid, Polyanion) in einem Bad angewendet werden. Das trifft besonders im Fall A zu, d.h. bei einer Variante in der neben dem Polykation ein kationisch modifiziertes Kunstharz eingesetzt wird. Ein zweistufiges Verfahren ist zu bevorzugen, wenn neben dem Polykation und/oder einem polykationischen Kunstharz als weitere Komponente ein Polyanion oder ein Fluortensid eingesetzt wird. Durch eine schrittweise Behandlung des Substrates in separaten Reaktionslösungen wird eine unkontrollierte Komplexbildung in Lösung ausgeschlossen und so eine optimale Hydrophob- und/oder Oleophobmodifizierung bei geringen Ausgangskonzentrationen der Reaktionslösungen erreicht.

Membranen, die nach der beschriebenen Umsetzung modifiziert werden können, bestehen aus Polyolefinen, Polyester, Cellulose, Polyamiden und Polyurethanen. Besonders bevorzugt sind Polytetrafluorethylen und Polyvinylidenfluorid bzw. perfluorierte Copolymere mit Sulfon- und Carbonsäuregruppen in der Seitenkette sowie Polyethylen und Polypropylen als Polyolefin. Bevorzugte Polyestermembranen bestehen aus aromatischen Polyestern.

Nach der Modifizierung der polymeren Oberflächen, insbesondere der Fasern bzw. der textilen Flächengebilde, schließt sich ein Fixierprozeß bei Temperaturen zwischen 110 und 180°C an. Die Fixierzeit ist substratabhängig und muß dem jeweiligen Polymer angepaßt werden. Vorzugsweise arbeitet man zwischen 5 s und 5 min.

Die Erfindung wird durch die folgenden Beispiele näher erläutert. Dazu werden die Ölabweisung und die Wasserabweisung an Testverbindungen wie folgt geprüft:

### Testbedingungen:

Die Prüfung der Ölabweisung wird an textilen Flächengebilden nach AATCC 118-1966 T durchgeführt.

Die Prüfung der Wasserabweisung wird an textilen Flächengebilden wie folgt durchgeführt:
- Die zu prüfenden Stoffproben werden faltenfrei in einen Spannring eingespannt,
- die eingespannte Probe, ca. 20 x 30 cm, wird nun auf einen schrägen Ringhalter gelegt (bei gestreiftem Gewebe stets Streifenrichtung senkrecht positionieren),
- die 250 ml erforderliche Prüfwassermenge,
   T = ca. 18-20°C, wird in den ausgerichteten Kunststoff-Trichter gefüllt
   und
- nach der Wasserberieselung wird der Spannring abgenommen und zweimal an einem harten Gegenstand abgeschlagen und das gleiche an der gegenüberliegenden Seite des Ringes wiederholt.

Anschließend erfolgt die Benotung der Probe durch den Vergleich mit beigelegten Bildern sowie deren Beschreibung:
- Note 50:: vollständige Benetzung der gesamten Gewebeoberfläche
- Note 70:: teilweises Benetzen größerer Flächen
- Note 80:: deutliches Benetzen an der Oberfläche an Berieselungspunkten
- Note 90:: leichtes, mehr zufälliges Haften der Tropfen
- Note 100:: kein Haften der Tropfen, das Wasser perlt komplett ab.

Das angewendete Waschverfahren ist in der DIN 53920 angegeben (Programm "Pflegeleicht", 60°C und Vorwäsche Nr. 3, Beladung der Waschmaschine mit 1,5 kg Standardgewebe). Das verwendete Waschmittel war ein IEC-Testwaschmittel, Type 1; da eine mittlere Wasserhärte vorlag, konnte eine Dosierung von 50g IEC-Waschmittel für Vor- und Hauptwäsche eingesetzt werden. Vor jeder Prüfung wurde die Stoffprobe gebügelt und bei Raumklima ausgelegt.

### Beispiel 1

Ein einstufiges Verfahren zur fluorfreien Hydrophobausrüstung eines textilen Flächengebildes (Polyester) mit folgenden Behandlungsschritten:
a) Das Gewebe wird in einer Isopropanol/Wasserlösung (1:1) bei 50°C, 2 Min. getränkt.
b) Die vorbehandelte Stoffprobe wird in einer Lösung von Polykation und Kunstharz (Tab. 1) bei 60°C intensiv 5 min behandelt.
c) Abquetschen, Trocknen und Nachfixierung (5 min bei 160°C).

Die Ergebnisse sind in Tabelle 1 dargestellt.

**Tabelle 1**

| Material | Polykation | kationisches Kunstharz | Hydrophober Effekt Spraytest nach n Wäschen | | | |
|---|---|---|---|---|---|---|
| | | | 0. | 5. | 10. | 15. |
| | PAA¹(0,05n) | Tehabol³(30g/l) | 80 | 80 | 70 | 70 |
| | PAA (0,10n) | Tehabol (30g/l) | 80 | 80 | 70 | 70-80 |
| | PAA (0,05n) | Baygard⁴EP(10g/l) | 70 | 70 | 50 | |
| | PEI²(0,10n) | Tehabol (30g/l) | 80 | 80 | 70 | 70-50 |

| | | | | | | |
|---|---|---|---|---|---|---|
| 1 Polyallylaminhydrochlorid | | | | | | |
| 2 Polyethylenimin | | | | | | |
| 3 Dr. Böhme KG | | | | | | |
| 4 Bayer AG | | | | | | |

### Beispiel 2

Ein textiles Flächengebilde (Polyamid) wird, wie unter Beispiel 1 angegeben, modifiziert. Die Ergebnisse sind in Tabelle 2 dargestellt.

**Tabelle 2**

| Material | Polykation | kationisches Kunstharz | Hydrophober Effekt Spraytest nach n Wäschen | | | |
|---|---|---|---|---|---|---|
| | | | 0. | 5. | 10. | 15. |
| Polyamid | PAA (0,05n) | Tehabol (30g/l) | 80 | 80 | 70 | 70-50 |
| | PAA (0,10n) | Tehabol (30g/l) | 80 | 80 | 70 | 70-50 |
| | PAA (0,05n) | BaygardEP(10g/l) | 50 | 50 | | |
| | PEI (0,10n) | Tehabol (30g/l) | 80 | 80 | 70 | 50 |

Wie aus Beispiel 1 und 2 ersichtlich, wird durch die Kombination geringer Mengen einer hydrophilen, polykationischen Komponente mit einem fluorfreien Kunstharz auf Basis Fettsäurepolykondensationsprodukt, das ansonsten als Extender zur Ausrüstung mit Fluorcarbonharzen eingesetzt wird, eine fluorfreie hydrophobe Ausrüstung von PES und PA mit sehr guter Waschpermanenz möglich. Der Einsatz der polykationischen Komponente steigert dabei die Permanenz der Ausrüstung gegenüber dem reinen Harz beträchtlich.

### Beispiel 3 (Vergleichsbeispiel)

Polayamidgewebe und Polyestergewebe werden nach Beispiel 1 ausgerüstet, wobei nur Tehabol oder nur eine Polykationlösung verwendet wird. Die Ergebnisse sind in Tabelle 3 dargestellt.

**Tabelle 3**

| Material | Polykation | kationisches Kunstharz | Hydrophober Effekt Spraytest nach n Wäschen | | | |
|---|---|---|---|---|---|---|
| | | | 0. | 5. | 10. | 15. |
| Polyester | / | Tehabol (30g/l) | 80 | 70 | 50 | 0 |
| | PAA (0,10n) | / | 0 | | | |
| Polyamid | / | Tehabol (30g/l) | 80 | 70 | 50 | 0 |
| | PAA (0,10n) | / | 0 | | | |

### Beispiel 4

Zweistufiges Verfahren zur fluorfreien Hydrophobausrüstung eines textilen Flächengebildes (Polyester):
Die erste Verfahrensstufe erfolgt analog den Behandlungsschritten a) und b) im Beispiel 1. Das abgequetschte Gewebe wird anschließend in einer zweiten Verfahrensstufe intensiv mit einer Polyanionenlösung nachbehandelt. Die Weiterverarbeitung der so ausgerüsteten Probe erfolgt entsprechend c) im Beispiel 1. Die Ergebnisse sind in Tabelle 4 dargestellt.

### Beispiel 5

Ein textiles Flächengebilde (Polyamid) wird, wie unter Beispiel 4, angegeben, ausgerüstet. Die Ergenisse sind in Tabelle 4 dargestellt.

### Beispiel 6

Ein textiles Flächengebilde (Polyester/Baumwolle) wird nach Beispiel 4 behandelt. Die Ergebnisse sind in Tabelle 4 dargestellt.

Die in Tabelle 4 dargestellten Ergebnisse zeigen, daß durch die zusätzliche Verwendung eines Polyanions die hydrophoben Effekte im Vergleich zu Beipiel 1 und 2 beibehalten werden bzw. im Falle der Polyamidausrüstung deutlich verbessert werden können. Die erfindungsgemäße Methode ist geeignet, Mischungen aus Baumwolle/Polyester fluorfrei hydrophob auszurüsten.

**Tabelle 4**

| Material | 1. Stufe | 2. Stufe | Hydrophober Effekt Spraytest nach n Wäschen | | | |
|---|---|---|---|---|---|---|
| | | | 0. | 5. | 10. | 15. |
| PES | PAA (0,1n) Tehabol (30g/l) | PAS¹(0,01n) | 80 | 70 | 70 | 50 |
| PES | PAA (0,1n) | PAS (0,01n) | 0 | | | |
| PES | PEI (0,1n) Tehabol (30g/l) | Poly-MSA² | 70 | 70 | 70 | 70-50 |
| PES | Tehabol (30g/l) | Poly-MSA (0,01n) | 80 | 80 | 80 | 70 |
| PA | PAA (0,ln) Tehabol (30g/l) | PAS (0,01n) | 80 | 70 | 70 | 50 |
| PA | PAA (0,1n) | PAS (0,01n) | 0 | | | |

| Fortsetzung Tabelle 4 | | | | | | |
|---|---|---|---|---|---|---|
| PA | PEI (0,01n) Tehabol (30g/l) | Poly-MSA (0,01n) | 90 | 90 | 80 | 80-70 |
| PA | Tehabol (30g/l) | Poly-MSA (0,01n) | 90 | 90 | 80 | 80-70 |
| BW/PES | PAA (0,1n) Tehabol (30g/l) | / | 90 | 70 | 50 | |
| BW/PES | PAA (0,1n) Tehabol (30g/l) | PAS (0,05n) | 80 | 50 | | |
| 1PAS | Polyacrylsäure | | | | | |
| 2Poly-MSA | Copolymere des Maleinsäureanhydrids | | | | | |

### Beispiel 7

Zweistufiges Verfahren für eine fluorhaltige Hydrophob- und Oleophobausrüstung eines textilen Flächengebildes (Polyester): Die Modifizierung des Gewebes erfolgt in zwei getrennten Behandlungsstufen analog dem Beispiel 4, wobei anstelle der Polyanionenlösung in der zweiten Bearbeitungsstufe eine wäßrig-alkoholische Fluortensidlösung eingesetzt wird. Die Ergebnisse sind in Tabelle 5 zusammengestellt.

### Beispiel 8

Ein textiles Flächengebilde (Polyamid) wird, wie unter Beispiel 7 angegeben, modifiziert. Die Ergebnisse sind in Tabelle 5 dargestellt.

Die erreichbaren Oleophobiewerte, speziell bei der kunstharzfreien Variante, sind für PA und PES sehr gut.

**Tabelle 5**

| Material | 1. Stufe | 2. Stufe | Oleophobie wert | Hydrophober Effekt |
|---|---|---|---|---|
| PES | PAA(0,05n) Baygard EP (10g/l) | C₈F₁₇SO₂OH (0,01n) | 5 | 70 |
| PES | PAA (0,1n) | C₈F₁₇SO₂OH (0,1n) | 8 | 70 |
| PES | PAA (0,1n) | C₇F₁₅COOH (0,1n) | 6 | 50 |
| PES | PEI (0,1n) | C₈F₁₇SO₂OH (0,1n) | 6 | 70-50 |
| PA | PAA (0,05n) Baygard EP | C₈F₁₇SO₂OH (0,01n) | 5 | 70 |
| PA | PAA (0,1n) | C₈F₁₇SO₂OH (0,1n) | 8 | 70 |
| PA | PAA (0,1n) | C₇F₁₅COOH (0,1n) | 5 | 70 |
| PA | PEI (0,1n) | C₈F₁₇SO₂OH (0,1n) | 6 | 70-50 |

### Beispiel 9

Die textilen Materialien wurden mit einer 0,05n Polykationlösung (PAA) modifiziert.

Folgende Zeta-Potentiale wurden bestimmt:

**Tabelle 6**

| Material | Zeta-Potential vor d. Modifikation in mV | Zeta-Potential nach d. Modifikation in mV | Gewichtszunahme in % |
|---|---|---|---|
| PES | - 6,6 | +20,5 | 0,3 |
| PA | - 21,7 | +35,8 | 0,3 |

Die Ergebnisse zeigen die Umladung der Materialien.

## Patentansprüche

1. Oleophobe und/oder permanente hydrophobe Modifizierung für polymere Oberflächen in einem dünnen Film, **dadurch gekennzeichnet,** daß der Film unter Ladungsausgleich aus wenigstens einer Schicht aus einem wasserlöslichen Polykation und/oder einem kationischen Kunstharz sowie einem langkettigen Tensid oder einem alkylsubstituierten Polyanion ausgebildet ist.

2. Modifizierung nach Anspruch 1, **dadurch gekennzeichnet,** daß das Polykation und/oder das kationische Kunstharz auf der Substratoberfläche adsorbiert ist und komplex mit dem langkettigen Tensid oder dem alkylsubstituierten Polyanion verbunden ist.

3. Modifizierung nach Anspruch 1 oder 2, **dadurch gekennzeichnet,** daß neben dem Polykation ein kationisches Kunstharz eingesetzt wird, das wenigstens eine polyfuktionelle Verbindung enthält, wobei, wenn mehr als eine polyfunktionelle Verbindung enthalten ist, mindestens eine davon ionische bzw. Dipolgruppen enthält.

4. Modifizierung nach Anspruch 3, **dadurch gekennzeichnet,** daß das kationische Kunstharz zwei polyfunktionelle Verbindungen enthält.

5. Modifizierung nach einem der Ansprüche 1 oder 2, **dadurch gekennzeichnet,** daß die mit dem Polykation und/oder dem kationischen Kunstharz komplex gebundenen Komponenten aus der Gruppe bestehend aus Wachs- oder Paraffinemulsionen, Wachsdispersionen mit Polyvinylalkohol, Acrylaten, Ethylenmethacrylsäure-Copolymeren, Ethylen-methacrylsäure-Vinylacetat-Copolymeren und fettsäuremodifizierten Harzen ausgewählt sind.

6. Modifizierung nach einem der Ansprüche 1 oder 2, **dadurch gekennzeichnet,** daß die alkylgruppenhaltigen Polyanionen aus der Gruppe bestehend aus partiell veresterten bzw. amidierten Copolymeren des Maleinsäureanhydrids und partiell veresterten oder amidierten Polyacryl(methacryl) säurederivaten, ausgewählt sind.

7. Modifizierung nach einem der Ansprüche 1 oder 2, **dadurch gekennzeichent,** daß das Tensid ein aliphatisches, unverzweigtes langkettiges Fluortensid ist.

8. Modifizierung nach Anspruch 7, **dadurch gekennzeichnet,** daß das Tensid ein anionaktives Tensid ist.

9. Modifizierung nach Anspruch 7, **dadurch gekennzeichnet,** daß das Fluortensid aus der Gruppe, bestehend aus Perfluorcarbonsäuren CF₃(CF₂)ₙ-COOH mit n>6 und Perfluoralkylsufonsäuren CF₃(CF₂)ₙSO₂OH mit n>6, ausgewählt ist.

10. Verfahren zur Erzeugung einer oleophoben und/oder permanenten hydrophoben Modifizierung auf polymeren Oberflächen, **dadurch gekennzeichnet,** daß die polymere Oberfläche unter Ladungsausgleich mit einer Lösung aus einem Polykation und/oder einem kationischen Kunstharz behandelt wird und ferner mit einer Lösung eines langkettigen Tensids oder eines alkylsubstituierten Polyanions als zweite Komponente behandelt wird, wobei zwischen dem Polykation und/oder dem kationischen Kunstharz und der zweiten Komponente Komplexbildung erfolgt und dieser Komplex gegebenenfalls thermisch fixiert und umorientiert wird.

11. Verfahren nach Anspruch 10, **dadurch gekennzeichnet,** daß die polymere Oberfläche mit einem niedermolekularen Alkohol oder Netzmittel vorbehandelt wird.

12. Verfahren nach Anspruch 10 oder 11, **dadurch gekennzeichnet,** daß eine wäßrige oder wäßrig-alkoholische Lösung des Polykations und/oder dem kationischen Kunstharz und der zweiten Komponente eingesetzt wird.

13. Verfahren nach einem der vorherigen Ansprüche, **dadurch gekennzeichnet,** daß der pH-Wert der Lösung zwischen 4 und 8 eingestellt wird.

14. Verfahren nach einem der vorherigen Ansprüche, **dadurch gekennzeichnet,** daß eine 0,1 bis 50%ige Lösung oder Dispersion des kationischen Kunstharzes appliziert wird.

15. Verfahren nach Anspruch 14, **dadurch gekennzeichnet,** daß 5-60 g Kunstharz auf 1000 ml Wasser enthalten sind.

16. Verfahren nach einem der Anspüche 10 bis 13, **dadurch gekennzeichnet,** daß eine 0,1 bis 30%ige wäßrige Lösung des alkylgruppenhaltigen Polyanions appliziert wird.

17. Verfahren nach Anspruch 16, **dadurch gekennzeichnet,** daß eine 1 bis 20%ige Polyanionlösung appliziert wird.

18. Verfahren nach einem der Ansprüche 10 bis 13, **dadurch gekennzeichnet**, daß eine 0,01 bis 20%ige wäßrigalkoholische Lösung eines aliphatischen langkettigen, anionenaktiven Fluortensids appliziert wird.

19. Verfahren nach Anspruch 18, **dadurch gekennzeichnet,** daß die Lösung 0,1 bis 10%ig ist.

20. Verwendung der Modifizierung nach einem der vorhergehenden Ansprüche zur Beschichtung von Fasern oder textiler Materialien.

21. Verwendung der Modifizierung nach einem der vorhergehenden Ansprüche zur Bildung von Membranen.

## Claims

1. An oleophobic and/or permanent hydrophobic modification for polymeric surfaces in a thin film. characterized in that the film is formed with equalized charge from at least one layer of a water-soluble polycation and/or a cationic synthetic resin and a long-chain surfactant or an alkyl-substituted polyanion.

2. The modification of claim 1, characterized in that the polycation and/or the cationic synthetic resin is adsorbed on the substrate surface and complexed with the long-chain surfactant or the alkyl-substituted polyanion.

3. The modification of claim 1 or 2, characterized in that one uses alongside the polycation a cationic synthetic resin containing at least one polyfunctional compound, whereby if more than one polyfunctional compound is contained at least one thereof contains ionic or dipole groups.

4. The modification of claim 3, characterized in that the cationic synthetic resin contains two polyfunctional compounds.

5. The modification of either of claims 1 and 2, characterized in that the components complexed with the polycation and/or the cationic synthetic resin are selected from the group consisting of wax or paraffin emulsions, wax dispersions with polyvinyl alcohol, acrylates, ethylene-methacrylic acidic copolymers, ethylene-methacrylic acid-vinyl acetate copolymers and fatty acid modified resins.

6. The modification of either of claims 1 and 2, characterized in that the polyanions containing alkyl groups are selected from the group consisting of partly esterified or amidated copolymers of maleic anhydride and partly esterified or amidated polyacrylic (methacrylic) acid derivatives.

7. The modification of either of claims 1 and 2, characterized in that the surfactant is an aliphatic, unbranched, long-chain fluorosurfactant.

8. The modification of claim 7, characterized in that the surfactant is an anion-active surfactant.

9. The modification of claim 7, characterized in that the fluorosurfactant is selected from the group consisting of perfluorocarboxylic acids CF₃(CF₂)ₙ-COOH with n>6 and perfluoroalkylsulfonic acids CF₃(CF₂)ₙSO₂OH with n>6.

10. A method for producing an oleophobic and/or permanent hydrophobic modification on polymeric surfaces, characterized in that the polymeric surface is treated with equalized charge with a solution of a polycation and/or a cationic synthetic resin and is further treated with a solution of a long-chain surfactant or an alkyl-substituted polyanion as a second component, complex formation taking place between the polycation and/or the cationic synthetic resin and the second component and this complex optionally being thermally fixed and reoriented.

11. The method of claim 10, characterized in that the polymeric surface is pretreated with a low-molecular alcohol or wetting agent.

12. The method of claim 10 or 11, characterized in that an aqueous or aqueous-alcoholic solution of the polycation and/or the cationic synthetic resin and the second component is used.

13. The method of any of the above claims, characterized in that the pH value of the solution is adjusted between 4 and 8.

14. The method of any of the above claims, characterized in that a 0.1 to 50% solution or dispersion of the cationic synthetic resin is applied.

15. The method of claim 14, characterized in that 5 to 60 g synthetic resin is contained for 1000 ml water.

16. The method of any of claims 10 to 13, characterized in that a 0.1 to 30% aqueous solution of the polyanion containing alkyl groups is applied.

17. The method of claim 16, characterized in that a 1 to 20% polyanion solution is applied.

18. The method of any of claims 10 to 13, characterized in that a 0.01 to 20% aqueous-alcoholic solution of an aliphatic long-chain, anion-active fluorosurfactant is applied.

19. The method of claim 18, characterized in that the solution is 0.1 to 10%.

20. Use of the modification of any of the above claims for coating fibers or textile materials.

21. Use of the modification of any of the above claims for forming membranes.

## Revendications

1. Modification oléophobe et/ou hydrophobe permanente pour des surfaces polymères en un film mince, **caractérisée en ce que** le film, par compensation de charges, est formé au moins d'une couche constituée d'un polycation soluble dans l'eau et/ou d'une résine synthétique cationique, ainsi que d'un dérivé tensioactif à longue chaîne ou d'un polyanion substitué par un alkyle.

2. Modification selon la revendication 1, **caractérisée en ce que** le polycation et/ou la résine synthétique cationique est adsorbé à la surface du substrat, et est lié, par formation d'un complexe, avec le dérivé tensioactif à longue chaîne ou avec le polyanion substitué par un alkyle.

3. Modification selon la revendication 1 ou 2, **caractérisée en ce que**, en plus du polycation, on utilise une résine synthétique cationique qui contient au moins un composé polyfonctionnel, pour laquelle, lorsque plus d'un composé polyfonctionnel est impliqué, au moins l'un d'entre eux contient des groupes anioniques ou dipolaires.

4. Modification selon la revendication 3 **caractérisée en ce que** la résine synthétique cationique contient deux composés polyfonctionnels.

5. Modification selon l'une des revendications 1 ou 2, **caractérisée en ce que** les composants liés, par formation d'un complexe, au polycation et/ou à la résine synthétique cationique, sont choisis dans le groupe consistant en des émulsions de cire ou de paraffine, en des dispersions de cire avec un alcool polyvinylique, en des acrylates, en des copolymères d'éthylène et d'acide méthacrylique, en des copolymères éthylène - acide méthacrylique - acétate de vinyle et en des résines d'acides gras modifiés.

6. Modification selon l'une des revendications 1 ou 2, **caractérisée en ce que** les polyanions contenant des groupes alkyle sont choisis dans le groupe consistant en des copolymères partiellement estérifiés ou amidifiés de l'anhydride de l'acide maléique, et en des dérivés de l'acide polyacrylique(méthacrylique) partiellement estérifiés ou amidifiés.

7. Modification selon l'une des revendications 1 ou 2, **caractérisée en ce que** le dérivé tensioactif est un dérivé tensioactif fluoré aliphatique linéaire à longue chaîne.

8. Modification selon la revendication 7, **caractérisée en ce que** le dérivé tensioactif est un dérivé tensioactif actif anionique.

9. Modification selon la revendication 7, **caractérisée en ce que** le dérivé tensioactif fluoré est choisi dans le groupe consistant en des acides perfluorocarboxyliques CF₃(CF₂)ₙ-COOH avec n>6 et en des acides per^{f}luoroalkyl sulfoniques CF₃(CF₂)ₙSO₂OH avec n>6.

10. Procédé de production d'une modification oléophobe et/ou hydrophobe permanente sur des surfaces polymères, **caractérisé en ce que** la surface polymère, par compensation de charges, est traitée avec une solution d'un polycation et/ou d'une résine synthétique cationique, et, en outre, en ce qu'elle est traitée avec une solution d'un dérivé tensioactif à longue chaîne ou d'un polyanion substitué par un alkyle, comme second composant, ce qui donne lieu à la formation d'un complexe entre le polycation et/ou la résine synthétique cationique et le second composant; et en ce que ce complexe est, le cas échéant, fixé thermiquement et réorienté.

11. Procédé selon la revendication 10, **caractérisé en ce que** la surface polymère est prétraitée avec un alcool de faible masse moléculaire ou avec un agent mouillant.

12. Procédé selon la revendication 10 ou 11, **caractérisé en ce qu'**on utilise une solution aqueuse ou hydro-alcoolique du polycation et/ou de la résine synthétique cationique, et du second composant.

13. Procédé selon d'une des revendications précédentes, **caractérisé en ce que** la valeur du pH de la solution est ajustée entre 4 et 8.

14. Procédé selon l'une des revendications précédentes, **caractérisé en ce qu'**on applique une solution ou dispersion, à 0,1 - 50%, de la résine synthétique cationique.

15. Procédé selon la revendication 14, **caractérisé en ce que** 5 - 60 g de résine synthétique sont mis dans 1000 ml d'eau.

16. Procédé selon l'une des revendications 10 à 13, **caractérisé en ce qu'**on applique une solution aqueuse, à 0,1 - 30%, du polyanion contenant des groupes alkyle.

17. Procédé selon la revendication 16, **caractérisé en ce qu'**on applique une solution du polyanion à 1 - 20%.

18. Procédé selon l'une des revendications 10 à 13, **caractérisé en ce qu'**on applique une solution hydroalcoolique à 0,01 - 20% d'un dérivé tensioactif, actif anionique, fluoré aliphatique à longue chaîne.

19. Procédé selon la revendication 18, **caractérisé en ce que** la solution a une concentration de 0,1 à 10%.

20. Utilisation de la modification selon l'une des revendications précédentes pour l'enduction de fibres ou de matériaux textiles.

21. Utilisation de la modification selon l'une des revendications précédentes pour la formation de membranes.
